**Europäisches Patentamt**

**European Patent Office**

**Office européen des brevets**

(11) Veröffentlichungsnummer: **0 242 349 B1**

## (12) EUROPÄISCHE PATENTSCHRIFT

(45) Veröffentlichungstag der Patentschrift: **11.03.92**

(51) Int. Cl.⁵: **F16K 15/16**, F04B 39/10

(21) Anmeldenummer: **87890060.4**

(22) Anmeldetag: **25.03.87**

(54) **Verfahren zum Anpassen eines Verdichterventils an unterschiedliche Betriebsverhaeltnisse des Verdichters und Verdichterventil zur Durchfuehrung des Verfahrens.**

(30) Priorität: **16.04.86 AT 994/86**

(43) Veröffentlichungstag der Anmeldung:
**21.10.87 Patentblatt 87/43**

(45) Bekanntmachung des Hinweises auf die Patenterteilung:
**11.03.92 Patentblatt 92/11**

(84) Benannte Vertragsstaaten:
**DE FR GB IT**

(56) Entgegenhaltungen:
**AT-A- 317 403      DE-B- 1 042 172**
**DE-C- 681 288      DE-C- 688 429**
**DE-C- 716 657      FR-A- 2 088 755**

(73) Patentinhaber: **HOERBIGER VENTILWERKE AKTIENGESELLSCHAFT**
**Braunhubergasse 23**
**A-1110 Wien(AT)**

(72) Erfinder: **Hrabal, Hans, Ing.**
**Waidhausenstrasse 28**
**A-1140 Wien(AT)**

(74) Vertreter: **Klein, Adam, Dipl.Ing.**
**Fasangasse 49**
**A-1030 Wien(AT)**

Rank Xerox (UK) Business Services

**Beschreibung**

Die Erfindung bezieht sich auf ein Verfahren zum Verdichten oder Fördern von Gasen, mit einem Verdichter, von dessen Ventilen wenigstens eines an unterschiedliche Betriebsverhältnisse wie Drehzahlen und/oder das jeweilige spezifische Gewicht des geförderten Gases angepaßt wird, wobei das Ventil aus einem Ventilsitz mit Durchgangskanälen, die von einem in Schließrichtung durch eine Federkraft belasteten Verschlußstück gesteuert sind, und aus einem im Abstand vom Ventilsitz angeordneten Fänger besteht, der in Öffnungsrichtung einen Endanschlag für das Verschlußstück bildet und so dessen Hub bestimmt.

Die selbsttätig arbeitenden Verdichterventile werden bei der Hubbewegung bekanntlich von den Strömungskräften gesteuert, die von dem durch das Ventil hindurchströmenden Medium auf das Verschlußstück ausgeübt werden. Hinzu kommen zusätzliche Federkräfte, die sicherstellen, daß das Ventil im drucklosen Zustand geschlossen ist, das Aufschlagen des Verschlußstückes in Öffnungsrichtung an der Hubbegrenzung dämpfen und eine rechtzeitige Schließbewegung einleiten. Die Strömungskräfte hängen erheblich von der jeweiligen Drehzahl des Verdichters und vom spezifischen Gewicht des geförderten Gases ab. Bei gleichbleibendem Durchgangsquerschnitt durch das Ventil steigt die Strömungsgeschwindigkeit mit steigender Drehzahl an, gleichzeitig vergrößern sich die auf das Verschlußstück wirkenden Strömungskräfte. Die gleiche Wirkung ergibt sich, wenn das spezifische Gewicht des geförderten Gases größer wird, z.B. durch Erhöhung des Ansaugdruckes oder durch die Förderung schwerer Gase. Um dennoch eine ausgewogene Bewegung des Ventilverschlußstückes zu erhalten, muß die insgesamt auf das Verschlußstück ausgeübte Federkraft unter Berücksichtigung der jeweiligen Strömungskräfte und damit unter Berücksichtigung der Drehzahl des Verdichters und des spezifischen Gasgewichtes gewählt werden.

Wenn die Federkraft bei einer bestimmten Drehzahl oder einem bestimmten spezifischen Gewicht des Gases zu klein ist, wird die Öffnungsbewegung des Verschlußstückes zu wenig gedämpft und die Schließbewegung verspätet eingeleitet, wodurch es sowohl auf der Hubbegrenzung als auch auf dem Ventilsitz zu harten Aufschlägen kommt. Ist die Federkraft dagegen zu groß, dann öffnet das Ventil zu spät und es kommt zu einem Flattern des Verschlußstückes, weil die Strömungskräfte bei offenem Ventil das Verschlußstück nicht sicher an der Hubbegrenzung festhalten können. Bei mit konstanter Drehzahl angetriebenen und Gase mit gleichbleibendem spezifischen Gewicht fördernden Verdichtern kann die erforderliche Federkraft genau berechnet und angepaßt werden. Wenn dagegen die Drehzahl des Verdichters während des Betriebes variabel ist oder Gase mit unterschiedlichem spezifischen Gewicht gefördert werden, können besondere Maßnahmen erforderlich sein, um das Ventil an die sich ändernden Betriebsverhältnisse anzupassen.

Aus der AT-PS 317 403 ist ein gattungsgemäßes Ventil bekannt, bei dem die Durchgangskanäle des Ventilsitzes durch zwei übereinander angeordnete Verschlußstücke gesteuert sind. Das auf dem Ventilsitz unmittelbar aufliegende Verschlußstück ist mit Öffnungen versehen, die von dem darüberliegenden zweiten Verschlußstück abgedeckt werden. Außerdem sind zur Hubbegrenzung der beiden Verschlußstücke eigene Anschläge vorgesehen, die in verschieden großen Abständen vom Ventilsitz liegen. Das Verschlußstück, welches Öffnungen des darunterliegenden Verschlußstückes abdeckt, ist durch größere spezifische Federkräfte belastet als das darunterliegende Verschlußstück. Die beiden Verschlußstücke werden beim Öffnen des Ventils gleichzeitig vom Ventilsitz abgehoben. Bei hoher Drehzahl und entsprechend großen Strömungskräften gelangen beide Verschlußstücke bis zu ihren Endanschlägen, wo sie ohne zu flattern festgehalten werden. Wenn dagegen der Verdichter mit kleiner Drehzahl betrieben wird, werden beide Verschlußstücke entsprechend den kleineren Strömungskräften nur bis zum näherliegenden Hubanschlag angehoben, wobei sie sich voneinander nicht abheben. Mit dieser Ausführung kann nur in einem begrenzten Ausmaß eine Anpassung des Ventils an unterschiedliche Drehzahlen des Verdichters erreicht werden.

Aus der DE-C-716 657 ist eine Vorrichtung zum stufenlosen Regeln der Fördermenge von Kolbenverdichtern bekannt, bei der das Druckventil geregelt wird, wobei die Verschlußplatte des Druckventils auf ihren beiden Seiten federbelastet ist und die auf der Seite des Fängers vorgesehene Feder über einen Greifer verstellbar ist. Die Verstellung der insgesamt auf die Verschlußplatte des Druckventils wirkenden Federkraft erfolgt dabei in Abhängigkeit von der Fördermenge, um diese an den jeweiligen Bedarf anzupassen. Eine Anpassung des Ventils an unterschiedliche Betriebsverhältnisse wie Drehzahl oder spezifisches Gewicht des geförderten Gases ist bei dieser bekannten Ausführung nicht vorgesehen.

Der Erfindung liegt die Aufgabe zugrunde, verbesserte Maßnahmen zum Anpassen eines Verdichterventils an unterschiedliche Betriebsverhältnisse des Verdichters, wie Drehzahl und spezifischem Gewicht des geförderten Mediums, anzugeben.

Diese Aufgabe wird erfindungsgemäß mit einem Verfahren gelöst, das dadurch gekennzeichnet ist, daß bei Förderung des Gases mit veränderlicher Drehzahl des Verdichters oder bei unterschiedlichem spezifischen Gewicht des geförderten Gases bei fallender Drehzahl oder abnehmendem spezifischem Gewicht die auf das Verschlußstück des Ventils in Schließrichtung wirkende, gegebenenfalls aus mehreren Federkräften resultierende Federkraft und/oder der Hub des Verschlußstückes zwangsweise mittels einer Stellkraft veverkleinert wird, und daß bei steigender Drehzahl oder zunehmendem spezifischen Gewicht jeweils stufenlos oder in wenigstens einer Stufe im umgekehrten Sinn vorgegangen wird. Mit dieser Maßnahme ist es verhältnismäßig einfach und ohne aufwendige konstruktive Maßnahmen möglich, ein Verdichterventil an variable Drehzahlen des Verdichters und an unterschiedliche spezifische Gewichte des geförderten Mediums anzupassen. Wenn die insgesamt auf das Verschlußstück wirkenden Federkräfte den jeweiligen Betriebsverhältnissen entsprechend verändert werden, wird ein problemloses Arbeiten des Ventils erreicht, ohne daß der Hub des Verschlußstückes geändert wird. Das gleiche Ziel wird aber auch erreicht, wenn der Hub verändert wird, entweder anstelle der Federkraft oder gleichzeitig mit der Änderung der Federkraft. Es ist so innerhalb eines weiten Verstellbereiches möglich, die auf das Verschlußstück des Ventils aus Befederung und Strömungskräften wirkende resultierende Kraft an die jeweilige Drehzahl und bzw. oder das jeweilige spezifische Gewicht des Gases anzupassen, u.zw. entweder stufenlos oder durch stufenweise Verstellung in der jeweils erforderlichen Richtung.

Ein besonders einfach ausführbares Verfahren besteht im Rahmen der Erfindung darin, daß die auf das Verschlußstück wirkende resultierende Federkraft durch eine Übertragungsvorrichtung verändert wird, die mit Fingern auf das Verschlußstück wirkt und deren Stellkraft entgegen der in Schließrichtung wirkenden Federkraft so bemessen wird, daß immer eine in Schließrichtung auf das Verschlußstück wirkende resultierende Federkraft überwiegt. Es kann dabei für die Durchführung des erfindungsgemäßen Verfahrens eine Ventilbauart verwendet werden, die mit einer Abhebeeinrichtung zur Regelung der Fördermenge durch zeitweises Offenhalten des Ventils oder mit einer ähnlich ausgebildeten, auf das Verschlußstück wirkenden Übertragungsvorrichtung versehen ist. Zum Unterschied von der Fördermengenregelung muß beim erfindungsgemäßen Verfahren die von der Übertragungsvorrichtung auf das Verschlußstück ausgeübte Federkraft so bemessen werden, daß das Verschlußstück nicht zwangsweise offengehalten wird, sondern bei allen auftretenden Drehzahlen des Verdichters und spezifischen Gasgewichten einwandfrei arbeiten kann. Um dies zu erreichen, darf die von der Übertragungsvorrichtung in Öffnungsrichtung auf das Verschlußstück ausgeübte Kraft nicht größer sein als eine in Schließrichtung wirkende Federkraft. Bei den bekannten Abheberegelungen ist dagegen die vom Abhebegreifer auf das Verschlußstück ausgeübte Kraft immer größer als die Kraft der Schließfedern, weil andernfalls ein Offenhalten des Verschlußstückes gegen die Strömungskräfte nicht möglich wäre.

Zur Durchführung des erfindungsgemäßen Verfahrens kann ein Verdichterventil verwendet werden, das an unterschiedliche Betriebsverhältnisse des Verdichters anpaßbar ist und ein durch eine Federkraft belastetes Verschließstück aüfweist, wobei wenigstens einige der Schließfedern durch Öffnungen des Fängers hindurch an einem Federteller abgestützt sind, der an der Außenseite des Fängers in Hubrichtung des Verschlußstückes stufenlos oder in Stufen verstellbar angeordnet ist. Die Federn können auf diese Weise beliebig gespannt oder entspannt werden, so daß jeweils die gewünschte Federkraft erhalten wird. Da in der Regel die Verstellung nur über einen begrenzten Bereich erforderlich ist, genügt es, nur einen Teil der Federn verstellbar auszuführen. Wenn Dämpferplatten mit eigenen Dämpferfedern vorhanden sind, können auch diese oder einige derselben am verstellbaren Federteller abgestützt sein.

Bei einer bevorzugten Ausführung des Verdichterventils zur Durchführüng des erfindungsgemäßen Verfahrens ist der Fänger auf einem in der Ventilachse zentral angeordneten Führungsbolzen mit Hilfe einer Führungshülse verschiebbar gelagert, die an einem Ende mit einem Gewinde versehen ist und am anderen Ende einen verbreiterten Kopfteil aufweist, mit dem sie das Verschlußstück und gegebenenfalls weitere Plattenteile des Ventils, wie Dämpferplatten, Federplatten, Lenkerplatten u.dgl., gegebenenfalls mit Hilfe eines abgestuften Führungsringes, gegen den Fänger festspannt. Diese Ausbildung mit einer einzigen verschiebbaren Hülse im Zentrum des Ventils ist einfach ausführbar und kann an die jeweilige Bauart des Ventils leicht angepaßt werden.

Schließlich kann zur Durchführung des erfindungsgemäßen Verfahrens ein Verdichterventil verwendet werden, bei dem eine in Hubrichtung des Verschlußstückes verstellbare Übertragungsvorrichtung vorgesehen ist, die mit Fingern auf der den Federn abgewandten Seite des Verschlußstückes aufliegt. Es kann eine an sich bekannte Ventilausbildung mit Abhebegreifer verwendet werden, wie sie für die Regelung der Fördermenge von Verdichtern seit langem bekannt ist. Die Übertragungsvorrichtung kann aber auch zusätzlich und in Kombination mit Maßnahmen zur Verstellung der Federkraft oder des Hubes des Verschlußstückes vorgesehen werden.

Die erfindungsgemäßen Maßnahmen können sowohl beim Saugventil als auch beim Druckventil des Verdichters angewendet werden. Zweckmäßig, aber nicht zwingend, sind die Einrichtungen zum Betätigen der Verstellung der Federkraft oder des Ventilhubes auf der dem Verdichter abgewendeten Seite des eingebauten Ventiles vorgesehen, also beim Saugventil auf der Seite des Ventilsitzes und beim Druckventil auf der Seite des Fängers. Insbesondere beim Saugventil kann aber die Verstelleinrichtung durch den Ventilsitz hindurchgeführt sein und auf den Fänger oder einen an diesem vorgesehenen Federteller einwirken. Zur Abdeckung gegen den Verdichter kann bei dieser Ausführung eine zusätzliche Abdeckhaube vorgesehen sein, die den Fänger umschließt und an ihrem Rand zusammen mit dem Ventilsitz eingespannt ist.

Wenn für die Anpassung des Ventils an die jeweiligen Betriebsverhältnisse eine übertragungsvorrichtung nach Art eines Abhebegreifers entweder allein oder in Verbindung mit anderen Verstelleinrichtungen vorgesehen ist, kann diese in Richtung der Schließbefederung auf das Verschlußstück wirken, wobei ein Teil der Federkraft oder auch die gesamte Federkraft über die Übertragungsvorrichtung aufgebracht wird. In anderen Fällen ist es aber einfacher, dieAbhebevorrichtung auf der den Schließfedern gegenüberliegenden Seite auf das Verschlußstück einwirken zu lassen. Die Übertragunsvorrichtung wirkt dann gegen die Schließbefederung auf das Verschlußstück und hebt einen Teil der Federkraft der Schließfedern auf, bis die resultierende Federkraft auf das Verschlußstück die gewünschte und für die jeweilige Verdichterdrehzahl erforderliche Größe aufweist.

Die Schließfedern bestehen bei den bekannten Verdichterventilen in der Mehrzahl aus Schraubenfedern aus Stahl oder aus Stahlpatten mit aus der Plattenebene herausgebogenen federnden Armen. Auch die auf Abhebegreifer wirkenden Kräfte werden vielfach durch solche Stahlfedern übertragen. Wie bei den bekannten Ventilen ist es aber auch im Rahmen der Erfindung möglich, anstelle der Stahlfedern permanente oder elektrische Magnete, hydraulische oder pneumatische Zylinder oder auch beliebige Kombinationen vorzusehen, um die jeweils erforderlichen Kräfte zu erhalten.

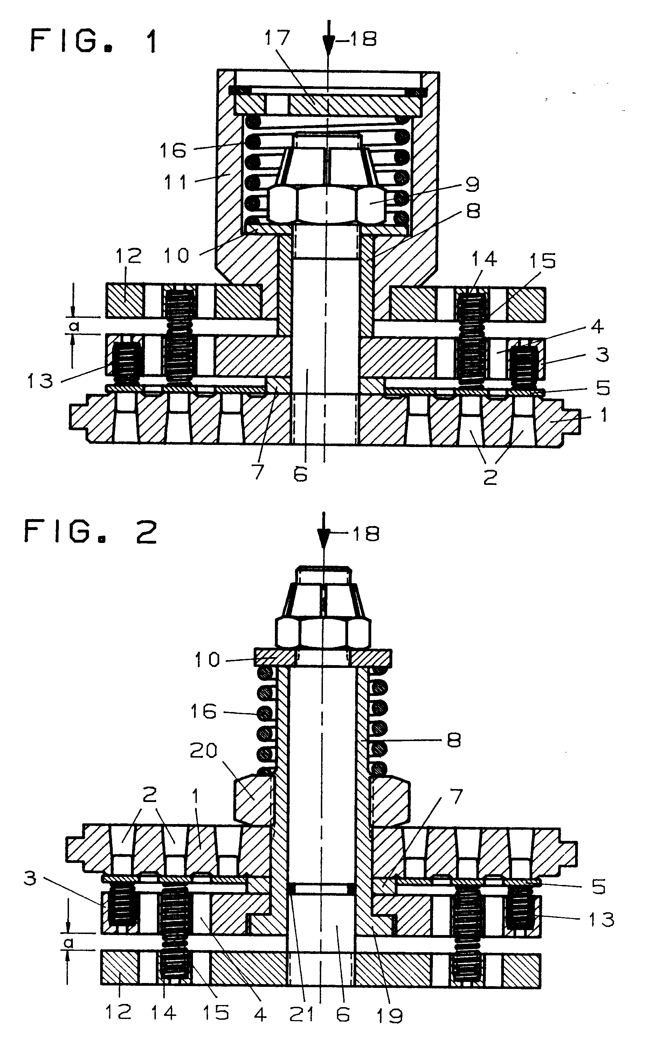

In den Zeichnungen ist die Erfindung an Hand von Ausführungsbeispielen näher erläutert. Die Fig. 1 bis 5 zeigen je ein Ausführungsbeispiel eines Verdichterventils zur Durchführung des erfindungsgemäßen Verfahrens im axialen Mittelschnitt, teilweise in schematischer Darstellung.

In allen Ausführungsbeispielen besteht das Verdichterventil aus einem Ventilsitz 1 mit Durchgangskanälen 2 und einem Fänger 3 mit Durchgangskanälen 4. Zwischen dem Ventilsitz 1 und dem Fänger 3 ist ein Verschlußstück 5 angeordnet, daß die Durchgangskanäle 2 im Ventilsitz 1 steuert. Beim Öffnen des Ventils hebt sich das Verschlußstück 5 vom Ventilsitz 1 ab und schlägt am Fänger 3 an, der die Hubbegrenzung bildet. Während dieser Hubbewegung ist das Verschlußstück 5 im Ventil geführt und durch Federkräfte belastet, die in den einzelnen Ausführungsbeispielen auf unterschiedlich Weise ausgeübt werden. Die Hubbewegung des Verschlußstückes 5 erfolgt unter Einwirkung dieser Federkräfte und von Strömungskräften, die durch das Medium ausgeübt werden, das durch das Ventil hindurchströmt. In allen Ausführungsbeispielen sind der Ventilsitz 1 und der Fänger 3 durch eine in der Ventilachse angeordnete Mittelschraube 6 zusammengehalten, wobei einige Ventilteile um einen mit a bezeichneten Abstand gegeneinander verschiebbar sind.

In Fig. 1 ist ein Ventil dargestellt, bei dem der Ventilsitz 1 und der Fänger 3 über eine Hubbeilage 7 in einem festen Abstand voneinander zusammengespannt sind, u.zw. mit Hilfe einer Spannhülse 8, die durch die Mutter 9 der Mittelschraube 6 über eine Beilagscheibe 10 gegen den Fänger 3 festgespannt ist. Die Mittelschraube 6 bildet zusammen mit der Spannhülse 8 einen Führungsbolzen, auf dem eine Büchse 11 verschiebbar gelagert ist, die einen über dem Fänger 3 angeordneten Federteller 12 trägt. Das Verschlußstück 5 ist durch im Fänger 3 abgestützte Schließfedern 13 belastet. Außerdem sind Schließfedern 14 vorgesehen, die durch Öffnungen 15 im Fänger 3 hindurch am Federteller 12 abgestützt sind. Die verschiebbar angeordnete Büchse 11 ist in Richtung vom Fänger 3 weg durch eine Rückstellfeder 16 belastet, die an der Beilagscheibe 10 mit einem Ende und an einem die Büchse 11 abschließenden Deckel 17 mit ihrem anderen Ende abgestützt ist.

In der in Fig. 1 dargestellten Lage sind die Durchgangskanäle 2 des Ventilsitzes 1 durch das Verschlußstück 5 geschlossen. Die Büchse 11 mit dem Federteller 12 ist unbelastet und durch die Rückstellfeder 16 in ihrer oberen Endlage gehalten, in der ein Absatz der Büchse 11 an der Beilagscheibe 10 anliegt. Die Schließfedern 14 sind weitgehend entlastet, so daß das Verschlußstück 5 lediglich durch die Schließfedern 13 belastet ist. Die Kraft der Schließfedern 13 kann unter Berücksichtigung der verbleibenden Federkraft der entspannten Schließfedern 14 so gewählt werden, daß die in dieser Stellung insgesamt auf das Verschlußstück 5 wirkende Federkraft für die kleinste vorkommende Drehzahl des Verdichters und für ein kleines spezifisches Gewicht des verdichteten Gases bemessen ist.

Wenn die Drehzahl oder das spezifische Gewicht des Gases steigt, ist auch eine Vergrößerung der Federkraft erforderlich. Im Sinne des erfindungsgemäßen Verfahrens wird zu diesem Zweck eine Stellkraft in Richtung des Pfeiles 18 auf die Büchse 11 ausgeübt. Diese wird dadurch gegen die Kraft der Rückstellfeder 16 zusammen mit dem Federteller 12 verschoben, wobei sich der Abstand a zum Fänger 3 in Abhängigkeit von der Größe der Stellkraft verringert. Durch diese Stellbewegung werden die Schließfedern 14 gespannt, wodurch die Federkraft auf das Verschlußstück 5 vergrößert wird. Es kann durch das Anpassen und Verändern der in Richtung des Pfeiles 18 wirkenden Stellkraft die insgesamt auf das Verschlußstück 5 wirkende resultierende Federkraft an die jeweiligen Betriebsverhältnisse des Verdichters angepaßt werden.

Die Ausbildung nach Fig. 1 eignet sich insbesondere für ein Druckventil. Der Ventilsitz 1 wird in üblicher Weise im Zylinderkopf festgespannt, wobei der Ventilsitz 1 dem Zylinder des Verdichters zugewendet ist und die Büchse 11 nach außen ragt, so daß die Stellkraft in Richtung des Pfeiles 18 aufgebracht werden kann. Die Ausführung nach Fig. 2 ist dagegen für ein Saugventil geeignet, bei dem der Fänger 3 zwischen dem Ventilsitz 1 und dem Zylinder des Verdichters angeordnet ist.

Im Ausführungsbeispiel nach Fig. 2 ist die Spannhülse 8 mit einem Bund 19 und mit einer Mutter 20 versehen. Dadurch ist der Fänger 3 über die Hubbeilage 7 gegen den Ventilsitz 1 festgespannt. Der Federteller 12 ist am unteren Ende der Mittelschraube 6 befestigt, die zusammen mit der Beilagscheibe 10 gegen die Kraft der Rückstellfeder 16 verschiebbar ist. Ein O-Ring 21 dichtet die Mittelschraube 6 gegen die Spannhülse 8 ab. Durch eine in Richtung des Pfeiles 18 auf die Mittelschraube 6 wirkende Stellkraft kann der Federteller 12 um den Abstand a verstellt werden, wodurch eine Veränderung und Anpassung der auf das Verschlußstück 5 wirkenden Federkraft möglich ist.

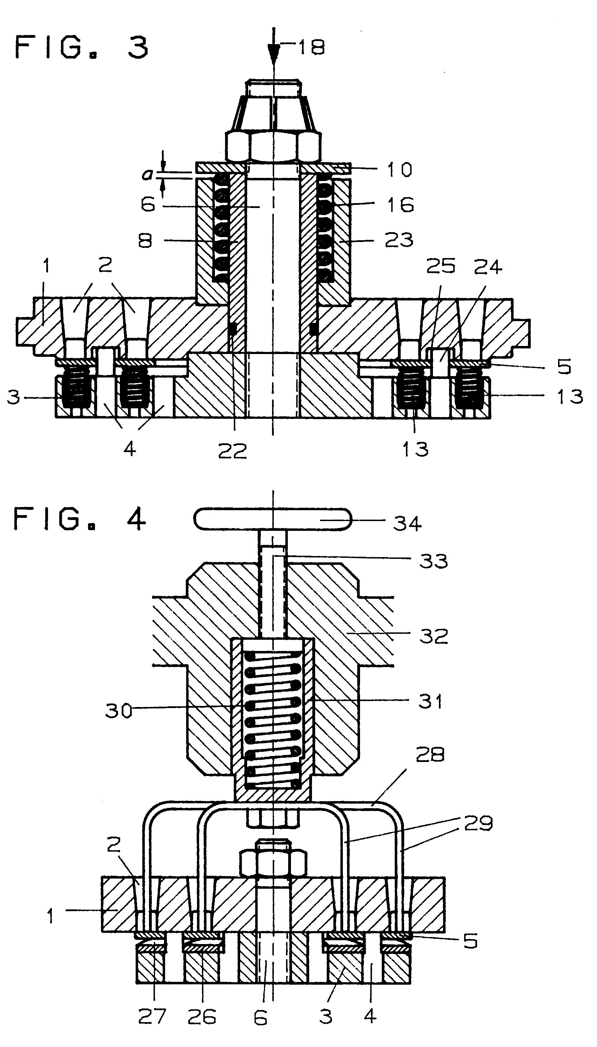

Fig. 3 zeigt eine Variante ohne verschiebbaren Federteller, bei der der Ventilsitz 1 und der Fänger 3 gegeneinander verschiebbar angeordnet sind. Der Fänger 3 ist mit der Mittelschraube 6 fest verbunden und von der Spannhülse 8 umgeben, die in einer zentralen Bohrung des Ventilsitzes 1 verschiebbar geführt ist. Zur Abdichtung ist ein O-Ring 22 vorgesehen. Die Rückstellfeder 16 ist von einer Abstandshülse 23 umgeben, die einen Endanschlag für die Beilagscheibe 10 bildet.

Durch Aufbringen einer Stellkraft auf die Mittelschraube 6 in Richtung des Pfeiles 18 wird der Fänger 3 gegen die Kraft der Rückstellfeder 16 nach unten verschoben, bis die Beilagscheibe 10 an der Abstandshülse 23 anschlägt. Der Abstand a bildet den maximal möglichen Verstellweg. Das Verschlußstück 5, welches in diesem Ausführungsbeispiel aus voneinander getrennten Einzelringen besteht, ist bei der Hubbewegung an gegen den Ventilsitz vorragenden Fortsätzen 24 des Fängers 3 geführt. Um zu verhindern, daß die Führung bei größtmöglichem Hub des Verschlußstückes 5 beeinträchtigt wird oder verloren geht, ragen die Fortsätze 24 in Aussparungen 25 im Ventilsitz 1 hinein, u.zw. um einen Betrag, der mindestens so groß wie der Abstand a ist, um den der Fänger 3 gegen den Ventilsitz 1 verstellt werden kann.

In Fig. 4 ist eine weitere Variante des erfindungsgemäßen Verdichterventils dargestellt. Das als Verschlußplatte ausgebildete Verschlußstück 5 ist dort durch eine Federplatte 26 mit gegen das Verschlußstück 5 aufgebogenen flexiblen Federarmen 27 belastet. Durch die Durchgangskanäle 2 des Ventilsitzes 1 hindurch wirkt eine Übertragungsvorrichtung 28 mit Fingern 29 auf das Verschlußstück 5. Eine Regelfeder 30 drückt die Übertragungsvorrichtung 28 gegen das Verschlußstück 5 und wirkt so der von der Federplatte 26 ausgeübten Schließkraft entgegen. Die Regelfeder 30 ist in einer kolbenartigen Hülse 31 angeordnet, die in einem Gehäuse 32 verschiebbar geführt ist. Die Regelfeder 30 kann durch eine Spindel 33 gespannt werden, die in das Gehäuse 32 eingeschraubt ist und durch ein Handrad 34 betätigt werden kann.

Bei diesem Ausführungsbeispiel kann somit durch Verstellung der Vorspannung der Regelfeder 30 mit Hilfe des Handrades 34 die insgesamt auf das Verschlußstück 5 wirkende resultierende Federkraft eingestellt und verändert werden. Die von der Regelfeder 30 ausgeübte Kraft darf aber die von der Federplatte 26 ausgeübte Schließkraft nicht übersteigen. Die Kraft der Regelfeder 30 muß so bemessen sein, daß immer eine in Schließrichtung auf das Verschlußstück 5 wirkende resultierende Federkraft überwiegt. Andernfalls würde das Verschlußstück 5 dauernd oder zumindest zeitweilig durch die Übertragungsvorrichtung 28 offengehalten und dadurch ein unbeeinflußtes Arbeiten des Ventils verhindert werden. Durch Aufbringen einer größeren Regelkraft mit Hilfe der Übertragungsvorrichtung 28 wird also keine Anpassung der Ventilbefederung an unterschiedliche Drehzahlen des Verdichters erreicht, sondern vielmehr eine Regelung der Fördermenge bei gleichbleibender Drehzahl des Verdichters, wie dies an sich bekannt ist.

Das erfindungsgemäße Verfahren zum Anpassen des Verdichterventils an unterschiedliche Betriebsverhältnisse des Verdichters durch Verändern der insgesamt wirkenden Schließfederkraft kann also mit Hilfe einer Abheberegelungseinrichtung durchgeführt werden, die für die Regelung der Fördermenge von Verdichtern bei gleichbleibender Drehzahl schon an sich bekannt ist. Der Abhebegreifer dient dabei als Übertragungsvorrichtung. Für das erfindungsgemäße Verfahren muß aber der Abhebegreifer mit einer anderen Stellkraft beaufschlagt werden als bei der bekannten Abheberegelung der Fördermenge.

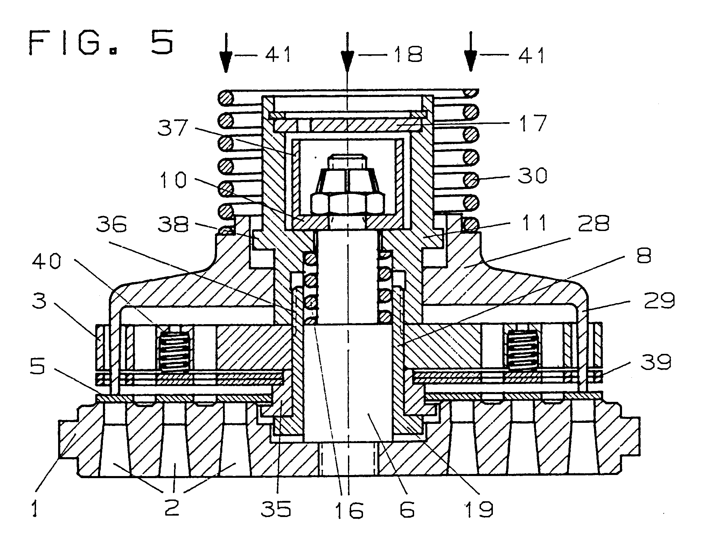

Beim Verdichterventil nach Fig. 5 ist eine Einrichtung zur Verstellung des Ventilhubes mit einer Übertragungsvorrichtung zum Verändern der Federkraft kombiniert. Die Mittelschraube 6 ist im Ventilsitz 1 befestigt, der als ortsfester Bestandteil des Ventils im Verdichter in nicht näher dargestellter Weise eingespannt ist. Die Spannhülse 8 besitzt, ähnlich wie beim Ausführungsbeispiel nach Fig. 2, einen Bund 19, der einen abgestuften Führungsring 35 gegen den Fänger 3 festspannt. Die Büchse 11 ist zu diesem Zweck mit Gewinde 36 versehen und auf das Ende der Spannhülse 8 aufgeschraubt. Durch eine in Richtung des Pfeiles 18 wirkende Stellkraft kann so der Fänger 3 gegen die Kraft der Rückstellfeder 16 gegen den Ventilsitz 1 verschoben werden. Ein hochgezogener Rand 37 der Beilagscheibe 10 dient dabei als Endanschlag für den Deckel 17 der Büchse 11.

Auf dem Außenmantel der Büchse 11 ist eine Übertragungsvorrichtung 28 verschiebbar geführt, die durch die Regelfeder 30 über ihre Finger 29 auf das Verschlußstück 5 gedrückt wird. Ein nach außen vorragender Kragen 38 dient als Endanschlag für die Übertragungsvorrichtung 28 in einer Richtung. Die von der Übertragungsvorrichtung 28 auf das Verschlußstück 5 übertragene Kraft wirkt bei diesem Ausführungsbeispiel in Schließrichtung des Verschlußstückes 5, so daß keine weiteren Schließfedern erforderlich sind. Vor dem Fänger 3 sind jedoch zwei Dämpferplatten 39 angeordnet, die durch Dämpferfedern 40 belastet sind und durch einen Absatz des Führungsringes 35 in einem festen Abstand vom Fänger 3 gehalten sind. Beim Verschieben des Fängers 3 ändert sich weder der Hub der Dämpferplatten 39 noch die von den Dämpferfedern 40 ausgeübte Kraft. Die Ventilkonstruktion kann aber auch so ausgelegt werden, daß auch der Hub der Dämpferplatten und/oder die auf diese wirkende Federkraft in gleicher Weise wie bei der Verschlußplatte verstellt werden können.

Beim Ausführungsbeispiel nach Fig. 5 kann das Verdichterventil im Sinne des erfindungsgemäßen Verfahrens auf zwei verschiedene Arten an unterschiedliche Betriebsverhältnisse des Verdichters angepaßt werden. Durch eine in Richtung des Pfeiles 18 auf die Büchse 11 wirkende Kraft kann der Hub des Verdichterventils verstellt werden, und durch eine in Richtung des Pfeiles 41 auf die Regelfeder 30 wirkende Kraft kann über die Übertragungsvorrichtung 28 die auf das Verschlußstück 5 wirkende Schließkraft verstellt werden. Es ist dadurch möglich, durch Anwendung entweder einer der beiden Maßnahmen oder durch gleichzeitige Anwendung beider Maßnahmen das Ventil an unterschiedliche Drehzahlen des Verdichters und bzw. oder an ein unterschiedliches spezifisches Gewicht des geförderten Gases anzupassen, wobei sowohl eine stufenlose Anpassung als auch eine Anpassung in einzelnen Stufen möglich ist. In Abhängigkeit vom jeweiligen Anwendungsfall können die beschriebenen Ausführungsbeispiele und deren konstruktiven Merkmale beliebig miteinander kombiniert werden. Außerdem ist es möglich, die dargestellten Schraubenfedern aus Stahl durch pneumatische oder magnetische Federkräfte zu ersetzen. Auch die Stellkräfte können den jeweiligen Gegebenheiten entsprechend mechanisch, pneumatisch, hydraulisch oder elektromagnetisch aufgebracht werden.

**Patentansprüche**

1.   Verfahren zum Verdichten oder Fördern von Gasen, mit einem Verdichter, von dessen Ventilen wenigstens eines an unterschiedliche Betriebsverhältnisse wie Drehzahlen und/oder das jeweilige spezifische Gewicht des geförderten Gases angepaßt wird, wobei das Ventil aus einem Ventilsitz (1) mit Durchgangskanälen, die von einem in Schließrichtung durch eine Federkraft belasteten Verschlußstück (5) gesteuert sind, und aus einem im Abstand vom Ventilsitz angeordneten Fänger besteht, der in Öffnungsrichtung einen Endanschlag für das Verschlußstück bildet und so dessen Hub bestimmt, dadurch gekennzeichnet, daß bei Förderung des Gases mit veränderlicher Drehzahl des Verdichters oder bei unterschiedlichem spezifischen Gewicht des geförderten Gases bei fallender Drehzahl oder abnehmendem spezifischen Gewicht die auf das Verschlußstück (5) des Ventils in Schließrichtung wirkende, gegebenenfalls aus mehreren Federkräften resultierende Federkraft und/oder der Hub des Verschlußstückes (5) zwangsweise mittels einer Stellkraft verkleinert wird, und daß bei steigender Drehzahl oder zunehmendem spezifischen Gewicht jeweils stufenlos oder in wenigstens einer Stufe im umgekehrten Sinn vorgegangen wird.

2.   Verfahren nach Anspruch 1, dadurch gekennzeichnet, daß die auf das Verschlußstück (2) wirkende resultierende Federkraft durch eine Übertragungsvorrichtung (28) verändert wird, die mit Fingern (29) auf das Verschlußstück (5) wirkt und deren Stellkraft entgegen der in Schließrichtung wirkenden Federkraft so bemessen wird, daß immer eine in Schließrichtung auf das Verschlußstück (5) wirkende resultierende Federkraft überwiegt.

3.   Verdichterventil, das an unterschiedliche Betriebsverhältnisse eines Verdichters anpaßbar ist, zur Durchführung des Verfahrens nach Anspruch 1, wobei das Ventil aus einem Ventilsitz mit Durchgangskanälen, die von einem in Schließrichtung durch eine Federkraft belasteten Verschlußstück gesteuert sind, und aus einem im Abstand vom Ventilsitz angeordneten Fänger besteht, der in Öffnungsrichtung einen Endanschlag für das Verschlußstück bildet und so dessen Hub bestimmt, dadurch gekennzeichnet, daß wenigstens einige der Schließfedern (14) durch Öffnungen (15) des Fängers (3) hindurch an einem Federteller (12) abgestützt sind, der an der Außenseite des Fängers (3) in Hubrichtung des Verschlußstückes (5) stufenlos oder in Stufen verstellbar angeordnet ist.

4. Verdichterventil, das an unterschiedliche Betriebsverhältnisse eines Verdichters anpaßbar ist, zur Durchführung des Verfahrens nach Anspruch 1, wobei das Ventil aus einem Ventilsitz mit Durchgangskanälen, die von einem in Schließrichtung durch eine Federkraft belasteten Verschlußstück gesteuert sind, und aus einem im Abstand vom Ventilsitz angeordneten Fänger besteht, der in Öffnungsrichtung einen Endanschlag für das Verschlußstück bildet und so dessen Hub bestimmt, dadurch gekennzeichnet, daß der Fänger (3) auf einem in der Ventilachse zentral angeordneten Führungsbolzen (6) mit Hilfe einer Führungshülse (8) verschiebbar gelagert ist, die an einem Ende mit einem Gewinde (36) versehen ist und am anderen Ende einen verbreiterten Kopfteil (19) aufweist, mit dem sie das Verschlußstück (5) und gegebenenfalls weitere Plattenteile des Ventils, wie Dämpferplatten (39), Federplatten, Lenkerplatten u.dgl., gegebenenfalls mit Hilfe eines abgestuften Führungsringes (35), gegen den Fänger (3) festspannt.

5. Verdichterventil zur Durchführung des Verfahrens nach Anspruch 2, wobei das Ventil aus einem Ventilsitz mit Durchgangskanälen, die von einem in Schließrichtung durch Federn belasteten Verschlußstück gesteuert sind, und aus einem im Abstand vom Ventilsitz angeordneten Fänger besteht, an dem die Federn abgestützt sind und der in Öffnungsrichtung einen Endanschlag für das Verschlußstück bildet und so dessen Hub bestimmt, dadurch gekennzeichnet, daß eine zur Regelung der Fördermenge des Verdichters an sich bekannte, in Hubrichtung des Verschlußstückes (5) verstellbare Übertragungsvorrichtung (28) vorgesehen ist, die mit Fingern (29) auf der den Federn abgewandten Seite des Verschlußstückes (5) aufliegt.

**Claims**

1. A method for compressing or conveying gases, comprising a compressor, of whose valves at least one is adapted to different operating conditions such as rotational speeds and/or the respective specific weight of the conveyed gas, the valve comprising a valve seat (1) with through ducts, which are controlled by a sealing element (5) loaded in the direction of closure by a spring force, and a stop, which is arranged at a distance from the valve seat and in the direction of opening forms an end abutment for the sealing element and therefore determines the stroke of said sealing element, characterised in that, for conveying the gas at a varying rotational speeds of the compressor or for varying specific weights of the conveyed gas, when the rotational speed or secific weight decreases, the spring force acting upon the sealing element (5) of the valve in the direction of closure and optionally resulting from a plurality of spring forces and/or the stroke of the sealing element (5) is/are forcibly reduced by means of an adjusting force, and when the rotational speed or specific weight increases, the reverse procedure is carried out either continuously or in at least one stage.

2. A method according to claim 1, characterised in that the resulting spring force acting upon the sealing element (2) is varied by means of a transmission device (28), which acts with fingers (29) upon the sealing element (5) and whose adjusting force against the spring force acting in the direction of closure is dimensioned in such a manner that a resulting spring force acting in the direction of closure on the sealing element (5) always predominates.

3. A compressor valve adaptable to different operating conditions of a compressor for carrying out the method according to claim 1, the valve comprising a valve seat with through ducts, which are controlled by a sealing element loaded in the direction of closure by a spring force, and a stop, which is arranged at a distance from the valve seat and in the direction of opening forms an end abutment for the sealing element and therefore determines the stroke of said sealing element, characterised in that at least some of the closing springs (14) are supported through openings (15) in the stop (3) against a spring plate (12), which is arranged on the outside of the stop (3) so as to be continuously adjustable or adjustable in stages in the stroke direction of the sealing element (5).

4. A compressor valve adaptable to different operating conditions of a compressor for carrying out the method according to claim 1, the valve comprising a valve seat with through ducts, which are controlled by a sealing element loaded in the direction of closure by a spring force, and a stop, which is arranged at a distance from the valve seat and in the direction of opening forms an end abutment for the sealing element and therefore determines the stroke of said sealing element, characterised in that the stop (3) is displaceably mounted with the aid of a guide sleeve (8) on a guide bolt (6) arranged centrally in the valve axis, the guide sleeve (8) being provided at one end with a thread (36) and at the other end comprising an enlarged head section (19), with which it clamps the sealing element (5) and optionally further plate parts of the valve, such as damping plates (39), spring plates, guide plates and the like, optionally with the aid of a stepped guide ring (35) against the stop (3)

5. A compressor valve for carrying out the method according to claim 2, the valve comprising a valve seat with through ducts, which are controlled by a sealing element loaded in the direction of closure by springs, and a stop, which is arranged at a distance from the valve seat, against which the springs are supported and which in the direction of opening forms an end abutment for the sealing element and therefore determines the stroke of said sealing element, characterised in that a transmission device (28) known per se is provided for controlling the conveying quantity of the compressor, which transmission device is adjustable in the stroke direction of the sealing element (5) and rests with fingers (29) on the side of the sealing element (5) facing away from the springs.

**Revendications**

1. Procédé pour comprimer ou refouler des gaz à l'aide d'un compresseur dont on adapte l'une au moins des soupapes à différentes conditions de fonctionnement telles que les vitesses de rotation et/ou la masse volumique respective du gaz refoulé, la soupape étant constituée d'un siège de soupape (1) comportant des canaux de passage commandés par une pièce d'obturation (5) sollicitée dans le sens de la fermeture par une force de ressort, et d'une butée d'arrêt qui est disposée à distance du siège de soupape et qui forme dans le sens de l'ouverture, une butée d'extrémité pour la pièce d'obturation en définissant ainsi la course de celle-ci, caractérisé en ce que lors du refoulement du gaz avec une vitesse de rotation variable du compresseur ou bien dans le cas d'une masse volumique différente du gaz refoulé, lorsque la vitesse de rotation chute ou que la masse volumique diminue, la force de ressort résultant le cas échéant de plusieurs forces de ressort et agissant sur la pièce d'obturation (5) de la soupape dans le sens de la fermeture, et/ou la course de la pièce d'obturation (5) est réduite de manière forcée au moyen d'une force de réglage, et en ce que lorsque la vitesse de rotation augmente ou que la masse volumique augmente, on procède respectivement, en continu ou selon au moins un palier, de la manière inverse.

2. Procédé selon la revendication 1, caractérisé en ce que la force de ressort résultante agissant sur la pièce d'obturation (5) est modifiée par un dispositif de transmission (28) qui agit sur la pièce d'obturation (5) par l'intermédiaire de doigts (29), et dont la force de réglage à l'encontre de la force de ressort agissant dans le sens de la fermeture, est dimensionnée de manière à ce que prédomine toujours une force de ressort résultante agissant sur la pièce d'obturation (5) dans le sens de la fermeture.

3. Soupape de compresseur adaptable à différentes conditions de fonctionnement d'un compresseur et destinée à la mise en oeuvre du procédé selon la revendication 1, la soupape étant constituée d'un siège de soupape comportant des canaux de passage commandés par une pièce d'obturation sollicitée dans le sens de la fermeture par une force de ressort, et d'une butée d'arrêt qui est disposée à distance du siège de soupape et qui forme, dans le sens de l'ouverture, une butée d'extrémité pour la pièce d'obturation en définissant ainsi la course de celle-ci, caractérisée en ce que quelques-uns au moins des ressorts de fermeture (14) s'appuient, en passant au-travers d'ouvertures (15) de la butée d'arrêt (3), sur un plateau de suspension (12) qui est disposé sur le côté extérieur de la butée d'arrêt (3) de manière réglable en continu ou par paliers dans la direction de la course de la pièce d'obturation (5).

4. Soupape de compresseur adaptable à différentes conditions de fonctionnement d'un compresseur et destinée à la mise en oeuvre du procédé selon la revendication 1, la soupape étant constituée d'un siège de soupape comportant des canaux de passage commandés par une pièce d'obturation sollicitée dans le sens de la fermeture par une force de ressort, et d'une butée d'arrêt qui est disposée à distance du siège de soupape et qui forme, dans le sens de l'ouverture, une butée d'extrémité pour la pièce d'obturation en définissant ainsi la course de celle-ci, caractérisée en ce que la butée d'arrêt (3) est montée coulissante sur une tige de guidage (6) disposée centralement sur l'axe de soupape, à l'aide d'une douille de guidage (8), qui à une extrémité est munie d'un filetage (36) et qui présente à l'autre extrémité une partie de tête (19) élargie à l'aide de laquelle elle serre contre la butée d'arrêt (3), la pièce d'obturation (5) et éventuellement d'autres éléments en forme de plateau de la soupape, tels que des plateaux d'amortissement (39), des plateaux élastiques, des plateaux à leviers ou analogues, le cas échéant à l'aide d'un anneau de guidage étagé (35).

5. Soupape de compresseur pour la mise en oeuvre du procédé selon la revendication 2, la soupape étant constituée d'un siège de soupape comportant des canaux de passage commandés par une pièce d'obturation sollicitée dans le sens de la fermeture par des ressorts, et d'une butée d'arrêt qui est disposée à distance du siège de soupape, sur laquelle s'appuient les ressorts et qui forme, dans le sens de l'ouverture, une butée d'extrémité pour la pièce d'obturation en définissant ainsi la course de celle-ci, caractérisée en ce que pour le réglage du débit du compresseur est prévu un dispositif de transmission (20) réglable dans la direction de la course de la pièce d'obturation (5) et reposant avec des doigts (29) sur le côté de la pièce d'obturation (5) opposé à celui ou se trouvent les ressorts.

FIG. 1

FIG. 2

FIG. 3

FIG. 4

11

FIG. 5